# EUROPEAN PATENT APPLICATION

(11) **EP 3 185 628 A1**
(43) Date of publication of application: **28.06.2017**
(21) Application number: 16198440.6
(22) Date of filing: 11.11.2016
(51) Int. Cl.: H04W 64/00, G01S 5/14, G01S 13/76, H04W 4/00, H04W 24/10, H04W 52/02, H04W 84/12

(54) **ADVERTISING WIFI FINE TIMING MEASUREMENT AVAILABILITY VIA A LOW-ENERGY COMMUNICATION LINK**

(30) Priority: 21.12.2015 US 201514976385
(71) Applicant: Intel IP Corporation, Santa Clara, CA 95054 (US)
(72) Inventor: STEINER, Itai, 69353 Tel Aviv (IL)
(74) Representative: 2SPL Patentanwälte PartG mbB

(57) **Abstract**

Apparatus and methods for advertising fine timing measurement availability using a low-energy or BLE communication protocol or link is provided. In an example, a method can include publishing an interval for responding to fine timing measurement requests via a low-energy wireless transmitter of a first wireless communication device; and enabling a WLAN wireless receiver of the first device during the interval.

## Description

### TECHNICAL FIELD

Embodiments pertain to transmitting voice data using radio access networks. Some embodiments relate to reducing crosstalk in mobile telephone communication equipment.

### BACKGROUND

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the Internet via a cellular network and/or a wireless local area network (WLAN), for example.

Mobile device users have begun to recognize that short-range positioning tools can assist the user in a number of tasks. In certain situations, it has been recognized that fine-timing measurements, or time-of-flight measurements, such as those specified by IEEE 802.11 rev MC, can be executed between two devices over a wireless local area network. A fine timing measurement can enable at least one of the devices to estimate the distance or range between the devices.

### BRIEF DESCRIPTION OF THE DRAWINGS

FIG. 1 illustrates generally an example system including a plurality of wireless communication devices.
FIG. 2 illustrates generally an example method for providing efficient advertising of FTM responder availability.
FIG. 3 illustrates generally an example method for providing energy efficient advertising of FTM responder availability when it is unknown whether a server is available for other nearby devices such as nearby potential clients.
FIG. 4 illustrates a block diagram of an example of a machine 400 upon which any one or more of the techniques (e.g., methodologies) discussed herein may perform.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

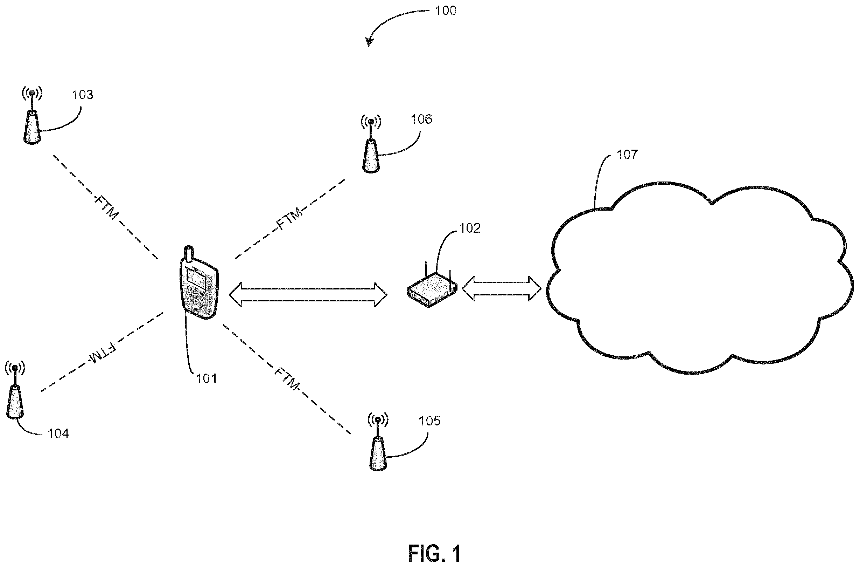

FIG. 1 illustrates generally an example system 100 including a plurality of wireless communication devices. The system 100 can include a client device such as a mobile cellular device 101 and one or more fine timing measurement responders 103, 104, 105, 106. In certain examples, the system 100 can include a WiFi access point 102 that, in turn, can optionally allow connection of the mobile cellular device 101 to the internet 107. Fine timing measurements (FTMs), or time-of-flight measurements, can be made by some mobile devices that are capable of establishing a wireless local area network (WLAN) communication link such as a communication link compatible with WiFi or IEEE 802.11 standards. Certain mobile communication devices such as the mobile cellular device 101 can use FTM information to estimate range from other FTM capable devices such as WiFi access points 102, for example, or the FTM responder 103, 104, 105, 106. An FTM responder 103, 104, 105, 106 can include devices capable of assisting a second device with conducting an FTM. In general, a device that is programmed to acquire FTM information can communicate FTM requests in an effort to locate and engage an FTM responder 103, 104, 105, 106 for the purpose of conducting an FTM test and acquiring the resulting FTM information.

In certain situations, fine timing measurement information can enhance or expand certain capabilities or applications that can be executed on a device, such as a mobile cellular device 101 that enters the reception range of the system 100. As discussed above, FTM information can be acquired by requesting and executing a fine timing measurement with a second device referred to herein as FTM responders 103, 104, 105, 106 using the WLAN communications capability of the requesting device and the FTM responder. Current conventions assume an FTM responder can always be available for participating in FTMs with mobile devices that enter the system area. This assumption is valid for access point type FTM responder devices that rely on an external power source. However, current trends such as those associated with the internet of things (IoT) indicate implementation of battery powered FTM devices to increase system coverage and accuracy. Having the FTM responder always available for FTM requests is incompatible with long term operation of battery powered FTM responders.

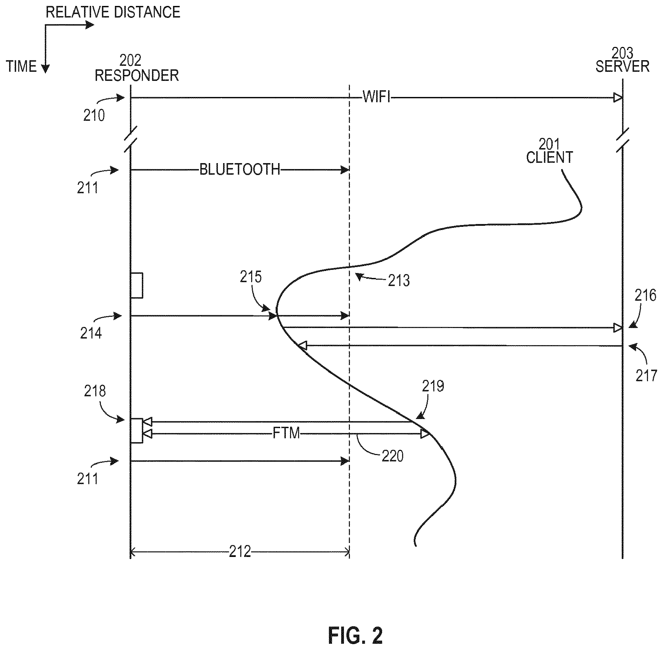

The present inventors have recognized methods and apparatus for energy efficient operation of FTM responders including mobile FTM responder devices. An aspect of the example methods and apparatus rely on the use of a low-energy communication link such as a Bluetooth or IEEE 802.1.15 compatible communication link, including Bluetooth Low-Energy (BLE), and does not impact current wireless personal area network (WPAN) communication protocols or standards. FIG. 2 illustrates generally an example method 200 for providing efficient advertising of FTM responder availability. The example method 200 assumes that potential client devices (Client) 201, such as a cellular phone or smartphone, within the vicinity of an example responder device (Responder) 202 can access a server 203 such as through a wireless wide area network, cellular connection or via an internet connection. At 210, the example responder device 202 can provide the server with identification information and FTM availability information for accepting FTM requests. At 211, the example responder device 202 can use a low-energy transmitter or transceiver, such as a Bluetooth or BLE compatible transmitter or transceiver, to transmit, publish or advertise the responder's identification information. The low-energy transmitter or transceiver is assumed to have a limited reception range 212. In certain examples, the example responder device 202 can continue to advertise 210 or broadcast the identification information using the low-energy communication link according to a predetermined schedule. At 213, a second mobile device, a potential client 201, can come within reception range of the low-energy transmitter of the example responder device 202. At 214, the example responder device 212 uses a low-energy transmitter or transceiver to transmit, publish or advertise the responder's identification information. At 215, the potential client 201 receives the identification information using a receiver compatible with the low-energy communication protocol, such as Bluetooth and BLE. At 216, the potential client 201 requests additional information about the responder device from the server. At 217, the second mobile device receives the FTM availability information from the server associated with the identification information. At 218, the example responder 202 enables a WLAN receiver, such as a WiFi or IEEE 802.11 compatible receiver for a predetermined interval of time. At 219, the second mobile device transmits a FTM request. At 220, the example responder device acknowledges the requests and then cooperates with the second device to participate in a FTM. At the conclusion of the FTM, the example responder can disable the WLAN receiver, transmitter, or transceiver or maintain the WLAN radio hardware in a low-energy state.

The above example method 200 allows the example responder device 202 to keep the WLAN receiver disabled for extended periods of time thus allowing the responder to be available for FTMs without expending a substantial amount of time having the WLAN receiver enabled for asynchronous requests. In addition, the example method 200 and example devices 201, 202 do not require modification of existing standards for available low-energy, WPAN communication protocols such as Bluetooth and BLE, for example.

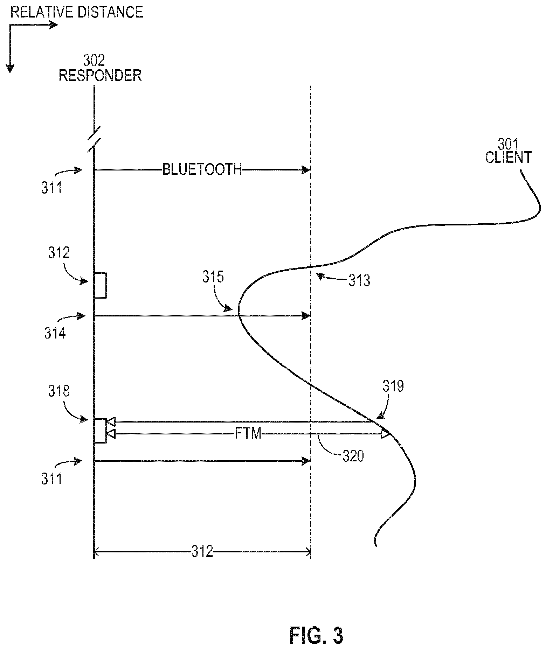

FIG. 3 illustrates generally an example method 300 for providing energy efficient advertising of FTM responder 302 availability when it is unknown whether a server is available for other nearby devices such as nearby potential clients 301. At 311, an example responder 302 can transmit, publish or advertise availability information using a low-energy transmitter or transceiver such as a Bluetooth compatible transmitter or transceiver. In certain examples, the example responder 302 can continue to periodically advertise 311 availability information using the low-energy broadcasts. At 312, the example responder can enable a WLAN receiver to receive FTM requests. The WLAN receiver can be enabled for a predetermined interval of time in accordance with the advertised availability information. At 313, a second device can enter the low-energy reception area of the example responder. At 314, the example responder 302 can again use the low-energy transmitter or transceiver to transmit the responder's availability information. At 315, the potential client 301 can receive the availability information via a low-energy receiver of the device of the potential client 301. At 318, the example responder 302 can enable the WLAN receiver in accordance with the availability information. At 319, the potential client 301 can use a WLAN transmitter or transceiver to broadcast a FTM request. At 320, the example responder 302 can receiver and acknowledge the FTM request and the example responder 302 and the potential client 301 can proceed to conduct an FTM. At the conclusion of the FTM, the example responder can disable the WLAN receiver, transmitter, or transceiver or maintain the WLAN radio hardware in a low-energy state.

The above example method 300 allows the example responder 302 to keep the WLAN receiver disabled for extended periods of time thus allowing the responder 302 to be available for FTMs without expending a substantial amount of energy having the WLAN receiver enabled for asynchronous requests. In addition, the example method 300 and example devices 301, 302 do not require modification of existing standards for available WPAN communication protocols such as Bluetooth and BLE, for example.

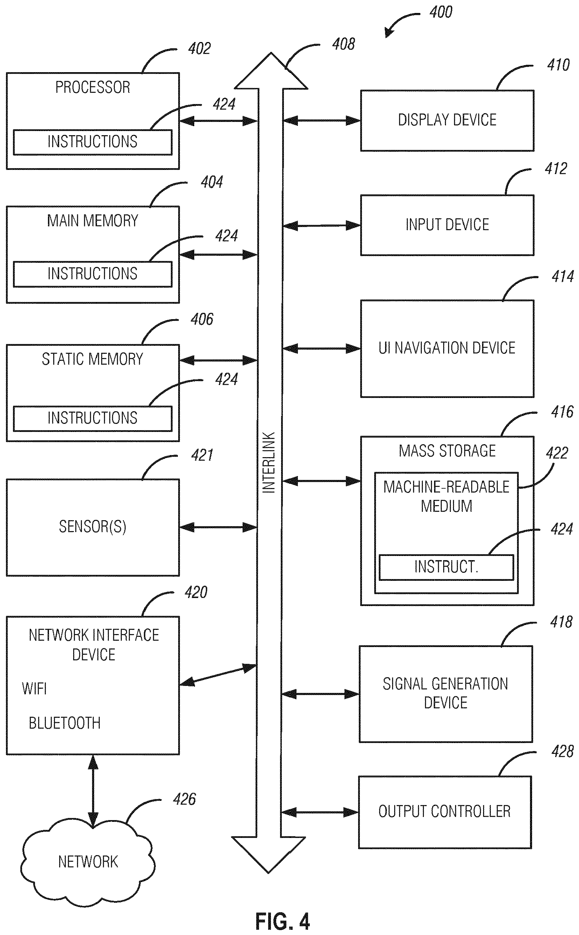

FIG. 4 illustrates a block diagram of an example machine 400 upon which any one or more of the techniques (e.g., methodologies) discussed herein may perform. In alternative embodiments, the machine 400 may operate as a standalone device or may be connected (e.g., networked) to other machines. In a networked deployment, the machine 400 may operate in the capacity of a server machine, a client machine, or both in server-client network environments. In an example, the machine 400 may act as a peer machine in peer-to-peer (P2P) (or other distributed) network environment. The machine 400 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations. In certain examples, the machine 400 can be a FTM responder. In some examples, the machine 400 can be a potential client device.

Examples, as described herein, may include, or may operate by, logic or a number of components, or mechanisms. Circuit sets (also known as a group of circuits or circuit groups) are a collection of circuits implemented in tangible entities that include hardware (e.g., simple circuits, gates, logic, etc.). Circuit set membership may be flexible over time and underlying hardware variability. Circuit sets include members that may, alone or in combination, perform specified operations when operating. In an example, hardware of the circuit set may be immutably designed to carry out a specific operation (e.g., hardwired). In an example, the hardware of the circuit set may include variably connected physical components (e.g., execution units, transistors, simple circuits, etc.) including a computer readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuit set in hardware via the variable connections to carry out portions of the specific operation when in operation. Accordingly, the computer readable medium is communicatively coupled to the other components of the circuit set member when the device is operating. In an example, any of the physical components may be used in more than one member of more than one circuit set. For example, under operation, execution units may be used in a first circuit of a first circuit set at one point in time and reused by a second circuit in the first circuit set, or by a third circuit in a second circuit set at a different time.

Machine (e.g., computer system) 400 may include a hardware processor 402 (e.g., a central processing unit (CPU), a graphics processing unit (GPU), a hardware processor core, controller, or any combination thereof), a main memory 404 and a static memory 406, some or all of which may communicate with each other via an interlink (e.g., bus) 408. The machine 400 may further include a display unit 410, an alphanumeric input device 412 (e.g., a keyboard), and a user interface (UI) navigation device 414 (e.g., a mouse). In an example, the display unit 410, input device 412 and UI navigation device 414 may be a touch screen display. The machine 400 may additionally include a storage device (e.g., drive unit) 416, a signal generation device 418 (e.g., a speaker), a network interface device 420, and one or more sensors 421, such as a global positioning system (GPS) sensor, compass, accelerometer, or other sensor. The machine 400 may include an output controller 428, such as a serial (e.g., universal serial bus (USB), parallel, or other wired or wireless (e.g., infrared (IR), NFC, etc.) connection to communicate or control one or more peripheral devices (e.g., a printer, card reader, etc.).

The storage device 416 may include a machine readable medium 422 on which is stored one or more sets of data structures or instructions 424 (e.g., software) embodying or utilized by any one or more of the techniques or functions described herein. The instructions 424 may also reside, completely or at least partially, within the main memory 404, within static memory 406, or within the hardware processor 402 during execution thereof by the machine 400. In an example, one or any combination of the hardware processor 402, the main memory 404, the static memory 406, or the storage device 416 may constitute machine readable media.

While the machine readable medium 422 is illustrated as a single medium, the term "machine readable medium" may include a single medium or multiple media (e.g., a centralized or distributed database, and/or associated caches and servers) configured to store the one or more instructions 424.

The term "machine readable medium" may include any medium that is capable of storing, encoding, or carrying instructions for execution by the machine 400 and that cause the machine 400 to perform any one or more of the techniques of the present disclosure, or that is capable of storing, encoding or carrying data structures used by or associated with such instructions. Non-limiting machine readable medium examples may include solid-state memories, and optical and magnetic media. In an example, a massed machine readable medium comprises a machine readable medium with a plurality of particles having invariant (e.g., rest) mass. Accordingly, massed machine-readable media are not transitory propagating signals. Specific examples of massed machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 424 may further be transmitted or received over a communications network 426 using a transmission medium via the network interface device 420 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, Bluetooth (1.0, 2.0, 3.0, 4.0 (BLE)), peer-to-peer (P2P) networks, among others. In an example, the network interface device 420 may include one or more physical jacks (e.g., Ethernet, coaxial, or phone jacks) or one or more antennas to connect to the communications network 426. In an example, the network interface device 420 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 400, and includes digital or analog communications signals or other intangible medium to facilitate communication of such software.

As discussed above, a WLAN communication link can be a link compatible with WiFi or IEEE 802.11 standards. In certain examples, such a link can be used to establish or participate in a wireless local area network. In certain examples, such a link can use the 2.4 gigahertz (GHz) radio band, the 5.0 GHz radio band or both the 2.4GHz and the 5 GHz radio band. WiFi can support a physical-layer data rate of 54 Mbps and can provide a range of about 100 feet although certain antennas can extend that range upto 2000ft. In certain examples, WiFi can operate over a 20MHz bandwidth or a 15MHz bandwidth. In certain examples, a WiFi network is contention-based system, where the access point and the mobile stations all vie for use of the same channel. Because of the shared media operation, WiFi networks are typically half duplex.

As discussed above, a low-energy communication link can be a link compatible with Bluetooth, including Bluetooth low-energy (BLE). In certain examples, such a link can be used to establish or participate in a wireless personal area network (WPAN). In certain examples, such a link can use the 2.4 gigahertz (GHz) radio band. Such a link can support a data rate of 1-3Mbps and can provide a range of about 100 feet. In certain examples, a low-energy communication link can use, but is not limited to, adaptive frequency hopping, lazy acknowledgement, 24-bit CRC, 32-bit Message Integrity Check, forward error correction, fast acknowledgement or combinations thereof. In some examples, a low-energy communication link can have 79, 1MHz channels. In other examples, a low-energy communication link can have 40, 2MHz channels. In some examples, communication over a low-energy communication link can use digital modulation techniques or a direct-sequence spread spectrum. In certain examples, power consumption for BLE chip sets can be between 0.01 watts (W) to 0.5W depending on use case. In a comparison with WiFi, a Bluetooth device can transmit 75 bytes per second using 2mW while a WiFi device can require 80mW for the same performance. In another test, a fully charged android phone accessed and began to play a 9 hour video first using a WiFi connection and then using a Bluetooth connection. The low-energy, Bluetooth connection (6 hours, 25 minutes) was able to access 80 minutes more of the video than the WiFi connection (5 hours, 6 minutes) before the phone battery died. The testers estimated that the battery life using the Bluetooth connection was 26% more than the battery life using the WiFi connection. In some examples, peak current consumption for a BLE radio can be less than 15mA.

### ADDITIONAL DESCRIPTION

In Example 1, a method can include publishing an interval for responding to fine-timing measurement requests via a low-energy transmitter of a first wireless communication device and enabling a wireless local area network (WLAN) receiver of the first wireless communication device during the interval.

In Example 2, the method of Example 1 optionally includes receiving a request for conducting a fine timing measurement at the WLAN receiver during the interval from a second wireless communication device.

In Example 3, the method of any one or more of Examples 1-2 optionally includes participating in the fine timing measurement with the second wireless device using the WLAN receiver and a WLAN transmitter of the first device.

In Example 4, the method of any one or more of Examples 1-3 optionally includes disabling the WLAN receiver at the conclusion of the fine timing measurement.

In Example 5, the method of any one or more of Examples 1-4 optionally includes disabling the WLAN transmitter at the conclusion of the fine timing measurement.

In Example 6, the low-energy wireless transmitter of any one or more of Examples 1-5 optionally is compatible with BLE or IEEE 802.15.1 standards.

In Example 7, the WLAN receiver of any one or more of Examples 1-6 optionally is compatible with IEEE 802.11 standards.

In Example 8, a wireless communication device can include a low-energy wireless transmitter, a wireless local area network (WLAN) receiver, and a processor configured to assist time-of-flight measurements with a second wireless communication device via a WLAN link, to receive requests for a time-of-flight measurement via the WLAN receiver, and to advertise an availability interval for receiving the requests via the low-energy wireless transmitter.

In Example 9, the controller of any one or more of Examples 1-8 optionally is configured to maintain the WLAN receiver in a low-energy state during periods of time outside of the availability interval.

In Example 10, an advertisement of the availability interval of any one or more of Examples 1-9 optionally includes an identifier associated with the low-energy wireless transmitter and the WLAN receiver.

In Example 11, the advertisement of the availability interval of any one or more of Examples 1-10 optionally includes a start time of the interval.

In Example 12, the advertisement of the availability interval of any one or more of Examples 1-11 optionally includes a duration of the interval.

In Example 13, the WLAN receiver of any one or more of Examples 1-12 optionally is compatible with IEEE 802.11 standards.

In Example 14, a wireless communication device can include a wireless personal area network (WPAN) receiver, a wireless local area network (WLAN) transmitter, and a processor configured to request a time-of-flight measurement from a second wireless communication device via a WLAN link, to participate in a time-of-flight measurement via the WLAN transmitter, and to receive an advertisement including availability information for the request via the WPAN receiver.

In Example 15, the availability information of any one or more of Examples 1-14 optionally includes an identifier associated with a WPAN transmitter and a WLAN receiver of the second wireless device.

In Example 16, the processor of any one or more of Examples 1-15 optionally is configured to query a server for additional availability information using the identifier.

In Example 17, the processor of any one or more of Examples 1-16 optionally is configured to receive the additional availability information from the server in response to the query, and the additional availability information any one or more of Examples 1-16 optionally includes an interval of time that the WLAN receiver of the second wireless communication device is enabled to receive the request.

In Example 18, the availability information of any one or more of Examples 1-17 optionally includes an interval of time that the WLAN receiver of the second wireless communication device is enabled to receive the request.

In Example 19, the availability information of any one or more of Examples 1-18 optionally includes a start time of the interval.

In Example 20, the availability information of any one or more of Examples 1-19 optionally includes a duration of the interval.

In Example 21, the WPAN receiver of any one or more of Examples 1-20 optionally is compatible with BLE or IEEE 802.15.1 standards.

In Example 22, the WLAN transmitter of any one or more of Examples 1-21 optionally is compatible with IEEE 801.11 standards.

In Example 23, at least one machine readable medium including instructions that, when executed by a machine, cause the machine to perform operations for a fine timing measurement responder where the operations can include publishing an interval for responding to fine timing measurement requests via a low-energy wireless transmitter of a first wireless communication device and enabling a wireless local area network (WLAN) receiver of the first device during the interval.

In Example 24, the operations of any one or more of Examples 1-23 optionally include receiving a request for conducting a fine timing measurement at the WLAN receiver during the interval from a second wireless communication device.

In Example 25, the operations of any one or more of Examples 1-24 optionally include participating in the fine timing measurement with the second wireless device using the WLAN receiver and a WLAN transmitter of the first device.

In Example 26, the operations of any one or more of Examples 1-25 optionally include disabling the WLAN receiver at the conclusion of the fine timing measurement.

In Example 27, the operations of any one or more of Examples 1-26 optionally include disabling the WLAN transmitter at the conclusion of the fine timing measurement.

In Example 28, the low-energy wireless transmitter of any one or more of Examples 1-27 optionally is compatible with Bluetooth or IEEE 802.15.1 standards.

In Example 29, the WLAN receiver of any one or more of Examples 1-28 optionally is compatible with IEEE 802.11 standards.

The above detailed description includes references to the accompanying drawings, which form a part of the detailed description. The drawings show, by way of illustration, specific embodiments in which the invention can be practiced. These embodiments are also referred to herein as "examples." All publications, patents, and patent documents referred to in this document are incorporated by reference herein in their entirety, as though individually incorporated by reference. In the event of inconsistent usages between this document and those documents so incorporated by reference, the usage in the incorporated reference(s) should be considered supplementary to that of this document; for irreconcilable inconsistencies, the usage in this document controls.

Method examples described herein can be machine or computer-implemented at least in part. Some examples can include a computer-readable storage medium or machine-readable storage medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. The code can be tangibly stored on one or more volatile, non-transitory, or non-volatile tangible computer-readable media, such as during execution or at other times. Examples of these tangible computer-readable storage media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The Abstract is provided to comply with 37 C.F.R. Section 1.72(b) requiring an abstract that will allow the reader to ascertain the nature and gist of the technical disclosure. It is submitted with the understanding that it will not be used to limit or interpret the scope or meaning of the claims. The following claims are hereby incorporated into the detailed description, with each claim standing on its own as a separate embodiment. Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

## Claims

1. A method comprising:
publishing an interval for responding to fine-timing measurement requests via a low-energy transmitter of a first wireless communication device; and
enabling a wireless local area network (WLAN) receiver of the first wireless communication device during the interval,
wherein the low-energy wireless transmitter is compatible with BLE or IEEE 802.15.1 standards, and
wherein the WLAN receiver is compatible with IEEE 802.11 standards.

2. The method of claim 1, including receiving a request for conducting a fine timing measurement at the WLAN receiver during the interval from a second wireless communication device.

3. The method of claim 2, including participating in the fine timing measurement with the second wireless device using the WLAN receiver and a WLAN transmitter of the first device.

4. The method of claim 3, including disabling the WLAN receiver at the conclusion of the fine timing measurement.

5. The method of claim 3, including disabling the WLAN transmitter at the conclusion of the fine timing measurement.

6. A wireless communication device comprising:
a low-energy wireless transmitter;
a wireless local area network (WLAN) receiver; and
a processor configured to assist time-of-flight measurements with a second wireless communication device via a WLAN link, to receive requests for a time-of-flight measurement via the WLAN receiver, and to advertise an availability interval for receiving the requests via the low-energy wireless transmitter,
wherein the low-energy wireless transmitter is compatible with BLE or IEEE 802.15.1 standards, and
wherein the WLAN receiver is compatible with IEEE 802.11 standards..

7. The wireless communication device of claim 6, wherein the controller is configured to maintain the WLAN receiver in a low-energy state during periods of time outside of the availability interval.

8. The wireless communication device of claim 6, wherein an advertisement of the availability interval includes an identifier associated with the low-energy wireless transmitter and the WLAN receiver.

9. A wireless communication device comprising:
a wireless personal area network (WPAN) receiver;
a wireless local area network (WLAN) transmitter; and
a processor configured to request a time-of-flight measurement from a second wireless communication device via a WLAN link, to participate in a time-of-flight measurement via the WLAN transmitter, and to receive an advertisement including availability information for the request via the WPAN receiver,
wherein the WPAN transmitter is compatible with BLE or IEEE 802.15.1 standards, and
wherein the WLAN receiver is compatible with IEEE 802.11 standards.

10. The wireless device of claim 9, wherein the availability information includes an identifier associated with a WPAN transmitter and a WLAN receiver of the second wireless device.

11. The wireless device of claim 10, wherein the processor is configured to query a server for additional availability information using the identifier and to receive the additional availability information from the server in response to the query; and
wherein the additional availability information includes an interval of time that the WLAN receiver of the second wireless communication device is enabled to receive the request.

12. The wireless device of claim 9, wherein the availability information includes an interval of time that the WLAN receiver of the second wireless communication device is enabled to receive the request.

13. At least one machine readable medium including instructions that, when executed by a machine, cause the machine to perform operations for a fine timing measurement responder, the operations comprising:
publishing an interval for responding to fine timing measurement requests via a low-energy wireless transmitter of a first wireless communication device; and
enabling a wireless local area network (WLAN) receiver of the first device during the interval,
wherein the low-energy wireless transmitter is compatible with Bluetooth or IEEE 802.15.1 standards, and
wherein the WLAN receiver is compatible with IEEE 802.11 standards.

14. The at least one machine readable medium of claim 13, wherein the operations include receiving a request for conducting a fine timing measurement at the WLAN receiver during the interval from a second wireless communication device.

15. The at least one machine readable medium of claim 14, wherein the operations include participating in the fine timing measurement with the second wireless device using the WLAN receiver and a WLAN transmitter of the first device.
